# EUROPEAN PATENT APPLICATION

(11) **EP 1 895 286 A1**
(43) Date of publication of application: **05.03.2008**
(21) Application number: 06731071.4
(22) Date of filing: 04.04.2006
(51) Int. Cl.: G01N 1/28, G01N 21/73, G01N 27/62

(54) **LIQUID INTRODUCING PLASMA SYSTEM**

(30) Priority: 22.06.2005 JP 2005181642; 22.06.2005 JP 2005181643
(71) Applicant: TOKYO INSTITUTE OF TECHNOLOGY, Tokyo 1528550 (JP)
(72) Inventor: OKINO, Akitoshi c/o Tokyo Institute of Technology, Yokohama-shi, Kanagawa 2268503 (JP); MIYAHARA, Hidekazu Tokyo Institute of Technology, Yokohama-shi, Kanagawa 2268503 (JP); OHBA, Goro c/o Tokyo Institute of Technology, Yokohama-shi Kanagawa 2268503 (JP)
(74) Representative: HOFFMANN EITLE
(86) International application number: PCT/JP2006/307123
(87) International publication number: WO 2006/137205

(57) **Abstract**

A liquid introducing plasma system including a plasma chamber in which a plasma is produced, a plasma generator device which creates the plasma in the chamber, and a spouting device for linearly ejecting a liquid in a linear jet to thereby introduce the liquid into the plasma chamber is disclosed. The plasma system is capable of supplying an ultra-small volume of sample liquid to the plasma while reducing consumption of electrical power required for generation of the plasma.

## Description

### [Technical Field]

The present invention relates to plasma systems for introducing a liquid into a plasma created therein.

### [Background Art]

A prior known approach to introducing a liquid into a plasma is to use a spraying device, called the nebulizer. Typically, the spray device is of the type ejecting the liquid in the form of a spray or "mist," which behaves to spread conically. The sprayed liquid accompanies a risk as to unwanted coproduction of liquid particles with large diameters, so it has been difficult to directly spray the liquid into a plasma. An alternative way is to employ a spray chamber for introducing the liquid into the plasma after having removed large diameter particles. Unfortunately, this approach suffers from a decrease in liquid introduction efficiency to a degree of several percent (%). Due to this efficiency reduction, it has been required to use a large volume-for example, 1 milliliter per minute (mL/min), or more or less-of sample liquid when performing plasma-used analysis of very small or "ultra-small" amounts of elements.

### [Disclosure of the Invention]

### [Objects of the Invention]

It is an object of the present invention to provide a liquid introducing plasma system capable of supplying an ultrasmall amount of liquid to a plasma.
It is another object of this invention to provide a liquid introducing plasma system capable of introducing a sample liquid into a plasma at a desired position therein.
It is still another object of the invention to prov-ide a liquid introducing plasma system capable of introducing a sample solution into a size-reduced or "micro" plasma.
It is yet another object of the invention to provide a liquid introducing plasma system capable of improving the analytical sensitivity during analysis of elements contained in a sample solution.
It is a further object of the invention to provide a liquid introducing plasma system capable of vaporizing a sample solution without having to disturb environmental conditions.
It is another further object of the invention to provide a liquid introducing plasma system capable of reducing electrical power consumed to create the plasma.
It is a further object of the invention to provide a liquid introducing plasma system capable of introducing a sample liquid into a plasma with introduction efficiency of almost one hundred percent (100%).

### [Means for Attaining the Objects]

(1) In accordance with one aspect of this invention, a liquid introducing plasma system is provided which includes a plasma chamber which permits plasma production therein, a plasma generator device for generating a plasma in the chamber, and a spouting device for linearly ejecting a liquid in a jet to thereby introduce the liquid into the plasma chamber.
(2) In accordance with another aspect of the invention, the liquid introducing plasma system recited in Paragraph (1) further includes a signal generator device for generation of more than one timing signal. The spouting device is operatively responsive to receipt of the timing signal, for intermittently ejecting the liquid into a plurality of in-line liquid particles or droplets.

### [Brief Description of the Drawings]

[Fig. 1] Fig. 1 is a diagram for explanation of a liquid introducing plasma system, which is of the type linearly ejecting a liquid into small diameter drops.
[Fig. 2] Fig. 2 is an explanation diagram of a liquid introducing plasma system of the type using a micro-plasma apparatus.
[Fig. 3] Fig. 3 is a diagram showing a spatial linear array of droplets which are being ejected from a spouting device. [Fig. 4] Fig. 4 is an explanation diagram of a liquid introducing plasma system of the type having a vaporizer device for vaporization of droplets ejected.
[Fig. 5] Fig. 5 is an explanation diagram of a liquid introducing plasma system of the type using a microplasma device and having a vaporizer device for vaporization of drops ejected.
[Fig. 6] Fig. 6 is an explanation diagram of a liquid introducing plasma system of the type inspecting a sample solution by use of several kinds of timing signals.

### [Modes Carrying Out the Invention]

### (1) Liquid Introducing Plasma System

A liquid introducing plasma system embodying this invention is the one that transports a liquid to a plasma. This plasma system is capable of injecting a sample liquid or solution into the plasma and thus is adaptable for use in various kinds of processing tasks, including but not limited to, quantitative analysis of small volume elements in the sample, decomposition treatment of certain material such as polychlorinated biphenyl (PCB), chlorofluorocarbon (CFC), also known as "flon," or the like, plasma processing such as chemical vapor deposition (CVD), and creation of new substances. An important feature of this plasma system lies in that it ejects a sample liquid along a linear orbit for introduction into the plasma. One example of the linearly ejected liquid is a thin beam-like flow or "jet" of liquid which is ejected continuously. Another example is a plurality of in-line particles or tiny drops, which are intermittently ejected at certain intervals. The inline droplets and the continuous linear beamed liquid are generically interpretable as line-shaped liquids, which are different in the length of a line segment and which include those less in droplet diameter, those with a prespecified length, and continuous ones, any two of which are not distinctly distinguishable over each other in a strict sense. The smaller the droplet diameter, the greater the effect for a small volume of liquid.

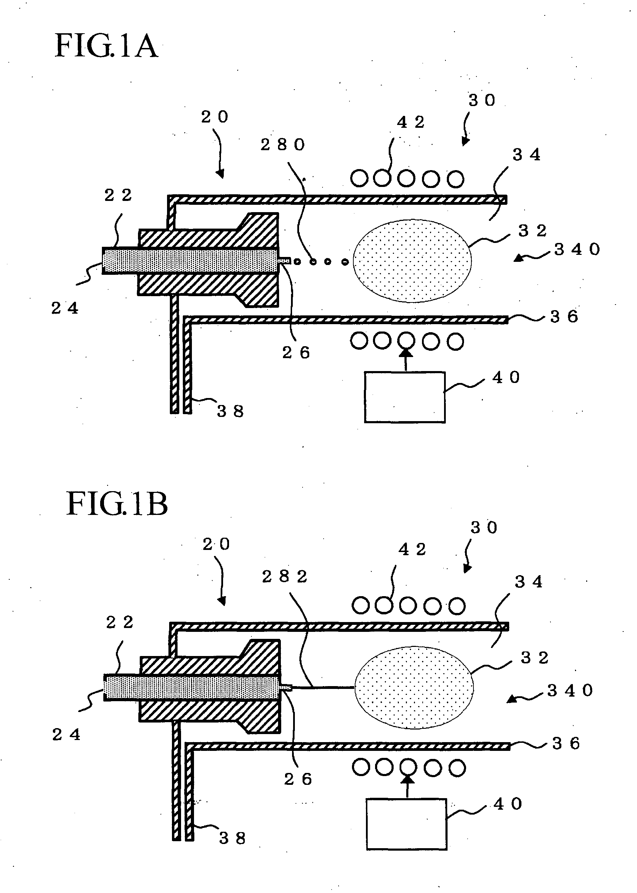

Fig. 1 depicts exemplary structures of a liquid introducing plasma system 20 for linearly ejecting a sample liquid for injection into a plasma 32. The example shown in Fig. 1(A) is arranged to intermittently eject the liquid in the form of a linear array of small diameter drops 280 for introduction into the plasma 32. The example of Fig. 1(B) is structured to continuously eject the liquid in a linear beam-like jet flow 282 for entry into plasma 32.

The liquid introducing plasma systems 20 of Fig. 1 are each arranged to include a spouting device 22 for linearly ejecting a sample liquid in a jet and a plasma apparatus 30 having a plasma chamber 34. The plasma apparatus 30 creates a plasma 32 in the plasma chamber 34. Plasma apparatus 30 may be designed to use several types of structural designs, such as a torch structures, parallel-electrode structures or the like. The plasma apparatus 30 of Fig. 1 has a plasma torch structure that enables generation of plasma 32 within plasma chamber 34, which is generally constituted from a housing 36 which forms plasma chamber 34 and a plasma generation device 40 that creates plasma 32 in plasma chamber 34. In the case of the plasma torch structure such as shown in Fig. 1, the plasma housing 36 of plasma apparatus 30 has a gas inlet port 38 for injecting a plasma gas into plasma chamber 34 and an exhaust opening or aperture 340 for draining the plasma gas, with the liquid jet ejector device 22 being disposed at one end of housing 36. The jet ejector 22 has a nozzle 26 which faces a forward inside space of housing 36, in which the plasma chamber 34 is situated. Plasma gas inlet 38 is attached to housing 36 in a tangential direction thereof so that the plasma gas injected exhibits circling movement within housing 36. This plasma gas movement in housing 36 enables the plasma state to be stably retained.

### (2) Plasma Generator Device

The plasma generator device 40 is the one that causes the plasma gas to be in a plasma state. Plasma generator 40 is structured for example as shown in Fig. 1 to include an electrical load coil 42 that is wound around the outer circumferential surface of the housing 36 of plasma chamber 34 and a power supply device for supplying high-frequency (HF) electric power to the load coil 42, thereby to produce a plasma 32 in plasma chamber 34. Plasma generator 40 has its ability to modulate an output to load coil 42. With this output modulation, it is possible to change the state of plasma 32. Note here that the output modulation refers to altering the output in characteristics to thereby change the plasma state-such as pulsating the output, increasing or decreasing the magnitude of output, turning on and off the output, changing output frequency or like processing.

Examples of the power supply for use with the plasma generator 40 are a direct current (DC) power supply, radiofrequency (RF) power supply, microwave power supply, and pulse power supply. Output power may be modulated in magnitude in a way synchronous with the timing at which the line-shaped liquid enters the plasma 32. An example is that upon introduction of liquid droplets 280 into plasma 32, the output of plasma generator 40 is increased in sync with the timing of intermittent introduction of droplets 280 into plasma 32. Usually, the plasma apparatus 30 has a limit in thermal load or else so that it is difficult to constantly provide high output power even when cooling plasma apparatus 30 by means of refrigeration. This difficulty is avoidable by the use of intermittent activation, resulting in achievement of the applicability of high output power to plasma 32 when needed, i.e., in an on-demand powering way.

### (3) Micro-Plasma Device

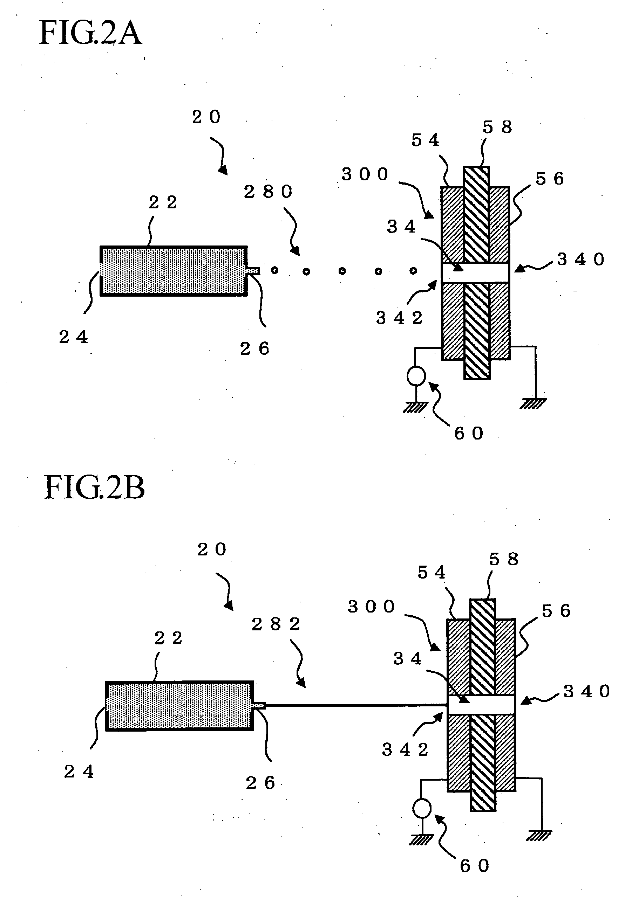

Fig. 2 shows exemplary structures of a liquid introducing plasma system equipped with a microplasma device 300. The structure shown in Fig. 2(A) is to intermittently eject a sample liquid in the form of a linear stream of small diameter droplets 280 for introduction into plasma chamber 34. The structure of Fig. 2(B) is for continuously ejecting the liquid in the form of a linear beam-like liquid flow or "jet" 282 for entry into plasma chamber 34. The microplasma device 300 is the one that produces a plasma with very small diameters, which are approximately 3 mm or less. Microplasma device 300 is arrangeable to use one or more electrical coils, electrode plates or sharp-ended electrodes; for example, it is designed to include a pair of spaced-apart electrodes 54 and 56 with an electrical insulator 58 being interposed or "sandwiched" therebetween and a voltage generator 60 for generating and applying a high potential level of voltage between the electrodes. The insulator-sandwiched multilayer electrode structure has a through-going hole. Upon application of the high voltage to one electrode 54 while letting the other electrode 56 be coupled to ground, a size-reduced or "micro" plasma is created inside of the through-hole, resulting in formation of a plasma chamber 34. This chamber 34 has a sample intake opening 342 and an exhaust opening 340. The intake opening 342 is a circular form in cross-section with a diameter of 1mm or less. Using the microplasma device 300 makes it possible to achieve the intended analytical sensitivity for inspection of ultrasmall volume samples. The microplasma created is so small that it has been impossible by prior known spray schemes to directly introduce the liquid into the plasma. On the contrary, with the illustrative liquid introducing plasma system, it becomes possible to directly introduce the liquid into even such microplasma also, by linear jet ejection of the liquid that is less in diameter than the plasma chamber.

### (4) Jet Ejector Device

The liquid jet ejector 22 ejects or spouts the liquid in a linear jet while offering its ability to intermittently eject the liquid in the form of a line of small diameter droplets 280 or, alternatively, to continuously eject it as a linear beam of liquid flow 282. The jet ejector 22 is typically arranged to include an actuator (pressure chamber). This actuator is made of a piezoelectric material, for storing therein a liquid that is fed from its intake port 24 and then spouts the liquid from nozzle 26. For example, the actuator operates in a way which follows: upon application of a voltage, it exhibits deformation to thereby linearly eject the liquid 28 from nozzle 26 in a jet. When the liquid 28 is reduced in amount within nozzle 26, a corresponding amount of liquid is resupplied by the capillary force as an example. The diameter of the jet or the inline droplets is controllable by the nozzle 26's spout diameter; accordingly, large diameter liquid drops that can disturb the plasma are hardly generated. It is neither happen that such drops spread to disturb the plasma as in spray devices. Thus it is possible to stably introduce the liquid into the plasma while at the same time enabling the introduction efficiency to be set at almost one hundred percent (100%). In comparison to prior art structures for feeding a sprayed sample in the form of a mist, the introduction efficiency is appreciably increased, which leads to effective use of an ultrasmall volume of sample. Note here that the jet ejector 22 is activatable intermittently or continuously in responding to receipt of an ejection timing signal, which is supplied thereto from an associative signal generator that is external to the liquid introducing plasma system.

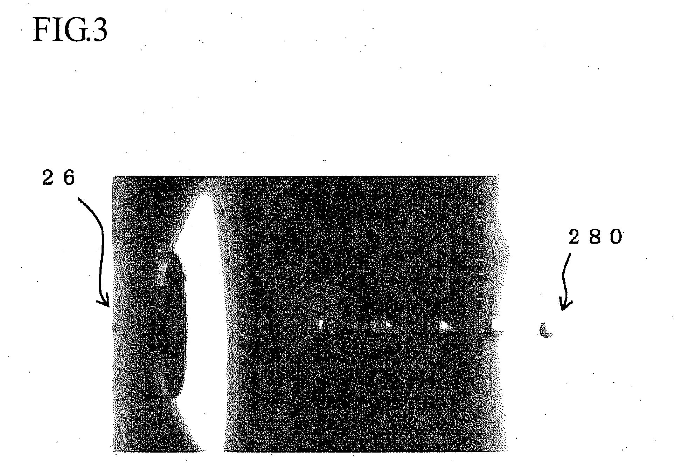

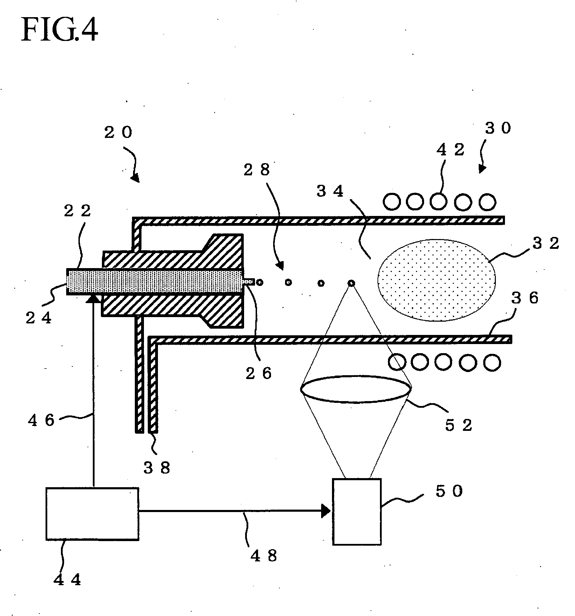

See Fig. 3, which shows a modellic image of a linear stream of tiny droplets 280 which are intermittently ejected from the nozzle 26. Fig. 3 is a photograph which was taken by a high-speed camera for demonstration of a spatial string or "coffle" of liquid drops 280 that are being ejected from nozzle 26 while driving the piezoelectric element. Fig. 4 shows a liquid introducing plasma system 20 with a signal generator 44 for control of the jet ejector 22. The signal generator 44 generates an ejection timing signal 46, in response to which the ejector 22 ejects the liquid drops 280 intermittently. This intermittent liquid ejection into tiny droplets is achievable by various kinds of techniques, some major examples of which are inkjet printer technologies, such as piezoelectric actuator-driven ejection, Bubblejet^{™} or else, and targeting schemes for use with a laser-produced plasma. The jet ejector 22 has an actuator (pressure room) by way of example. Intermittently applying a voltage to the actuator results in intermittent ejection of small-diameter liquid drops 280, once at a time, from the nozzle 26. These droplets fly and reach the plasma 32 for direct introduction thereinto. With this direct introduction of droplets 280 into plasma 24, the introduction efficiency is enabled to become almost 100%. For example, when the jet ejector 22 is driven to eject into the space a linear stream of liquid droplets from its nozzle 26 with a diameter of about ten to several tens of µm while simultaneously applying a pressure to the sample liquid within the pressure chamber, a thin jet-that is, continuous beam-like liquid-with its diameter defined by the diameter of nozzle 26 is produced to have a length of several tens of mm in maximum. Furthermore, when vibrating the nozzle's tip end by its associated piezoelectric element, this jet is convertable into a series array of liquid particles or tiny drops, i.e., droplets.

### (5) Timing Signal Generator Device

The timing signal generator 44 operates to generate the jet ejection timing signal 46 stated supra. This ejection timing signal 46 is generatable based on a reference timing signal. The reference timing signal is a "base" signal for providing the timing and is produced and supplied by a pulse generator device. This timing signal generating device may be laid out at any appropriate locations: in some cases, it is situated outside of the signal generator 44; in other cases, more than two reference timing generators may be provided at a plurality of positions as far as these are synchronizable in operation. The jet ejector 22 is responsive to receipt of the ejection timing signal 46 for ejecting the liquid in the form of a linear jet. The timing signal 46 is to control both the spatial interval or "distance" of adjacent ones of the liquid drops 280 and the length of each drop (i.e., the total length of a droplet with its front and rear peaks-say, "horn" and "tail"-which is intermediate in form between a continuous jet beam and a series of inline particles or droplets). An example of the timing signal 46 is a pulse signal. Ejection timing signal 46 is adaptively variable in frequency in a way pursuant to the kind of measurement, thereby enabling adjustment of the interval of intermittent ejection of inline droplets 280 or the length of a continuous jet beam of liquid.

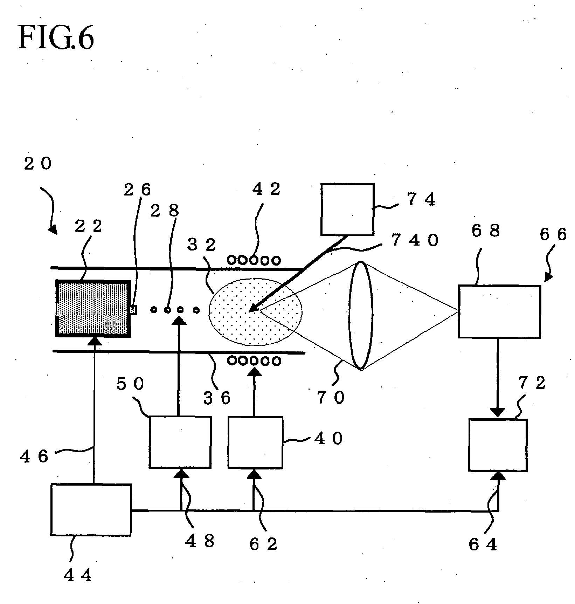

As shown in Fig. 6, the plasma generator 40 is rendered operative in sync with the timing of the jet ejection of sample liquid into inline droplets 280. This plasma generator 40 is responsive to receipt of a modulation timing signal 62 from the timing signal generator 44, for modulating its output. The modulation timing signal 62 is producible based on the reference timing signal of timing signal generator 44. Upon receipt of this modulation timing signal 62, plasma generator 40 modulates electric power at appropriate timing synchronized with a time point at which a droplet 280 flies for entry into the plasma 32. In case plasma generator 40 is configured from a pulse-operation high-frequency (HF) generator, the pulsate HF power that is supplied to the plasma is increased about three to ten times, thereby enabling excitation and ionization of the sample with increased efficiency. Timing signal generator 44 also generates, based on the reference timing signal, a detection timing signal 64 to be given to a measurement device 66 along with the modulation timing signal 62 as fed to the plasma generator 40.

### (6) Vaporizer Device

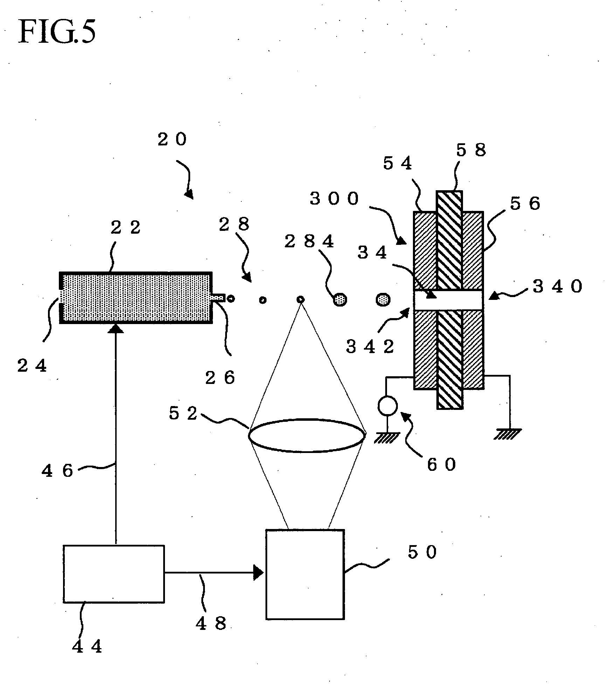

A vaporizer device 50 is for vaporization of the sample liquid. Exemplary structures of a vaporizer-equipped liquid introducing plasma system are shown in Figs. 4 and 5, wherein the example of Fig. 4 employs a torch-shaped plasma device whereas that of Fig. 5 uses a microplasma device. The vaporizer 50 is operatively responsive to receipt of a vaporization timing signal 48 as output from the timing' signal generator 44, for giving vaporization energy to the linear jet stream of liquid ejected. The vaporization energy may typically be radiation energy, such as light. Vaporizer 50 vaporizes the flying liquid 28 to thereby form a vaporized liquid 284 prior to introduction of droplets 28 into the plasma 32, by way of example. Vaporizer 50 receives the vaporization timing signal 48 from timing signal generator 44. This timing signal 48 is generated in sync with the timing of ejection of liquid 28. Vaporization timing signal 48 is generated based on the reference timing signal-for example, it is produced by signal generator 44 based on the jet ejection timing signal 46. Thus, vaporizer 4 emits energy toward the flying liquid 28 as its aimed target. The energy generated by vaporizer 50 may be the one that is high in magnitude enough to form the liquid 284 that is vaporized without exerting any influence on the plasma 32. A typical example of such energy is an infra-red ray. In case the liquid 28 is very small in volume, the infrared ray may be radiated by a visible light source, such as a halogen lamp, without having to use an infrared laser. Other examples include electromagnetic or radio waves, such as microwaves. In prior art liquid introducing plasma systems using a spray device for angularly ejecting a relatively large amount of liquid in the form of a mist, sprayed particles or drops are vaporized by means of external thermal conduction only, with no other choices. In contrast, the liquid introducing plasma system using the technique for ejecting the liquid in the form of a thin jet beam of liquid or in the form of a stream of inline droplets as intermittently ejected (droplet scheme), it is possible by collecting the energy at a passage position of liquid 28 to vaporize only this liquid 28 without heating a carrier gas thereof, that is, a gas used as an eluant for transmitting or "conveying" the sample liquid to be analyzed. In case the vaporization energy is light, this light is collected to liquid 28 by use of a vaporizing optical system 52. In this way, the vaporization is achieved not by heat application from the surrounding but by radiation energy such as light, the carrier gas is free from the risk of unintentional heat application. This avoids unwanted influences upon process parameters, such as a gas temperature, flow rate and others. Thus it is possible to control the parameters individually, thereby enabling improvement of the analytical sensitivity. Additionally, owing to the complete noncontact configuration (it does not use even the thermal conduction), the intended vaporization is attainable in a clean state.

### (7) Measurement Device

The measurement device 66 is the one that measures the plasma state of a sample which is introduced into the plasma 32. Upon injection of the sample into plasma 32, this sample is excited and ionized. The measurement device 66 operates, for example, to measure light emitted from the excited sample. Alternatively, it measures atoms, molecules or ions thereof, which are taken out of the sample. In the case of the light measurement, a measuring optics 70 is used to perform measurement for spectroscopic analysis of the light that is given off from the sample as shown in Fig. 6. Alternatively, in the case of ion measurement, it performs mass spectrometry of ions of the sample. Measurement device 66 may be designed to use ordinary equipment that performs the measurement to be done in currently available plasma systems. In case the linear liquid jet is ejected from jet ejector 22 in the form of inline droplets 280, these are intermittently introduced into plasma 32 so that the measurement is also performed intermittently. This makes it possible to reduce noises and improve the analytical sensitivity.

The measurement device 66 performs measurement in sync with the timing of jet ejection of the sample liquid into droplets 280. Upon entry of more than one droplet 280 to the plasma 32, measurement device 66 measures a plasma state of the sample. For instance, this measurement is performed in responding to a detection timing signal 64, which is received by measurement device 66 from the timing signal generator 44. The detection timing signal 66 is generated by the signal generator 44 based on the reference timing signal. Accordingly, measurement device 66 performs a measurement operation in response to receipt of this timing signal 64 at an appropriate timing at which a liquid droplet 280 that was flied into plasma 32 becomes in a plasma state. This timing signal responsive operability of measurement device 66 may lead to improvements in signal-to-noise (S/N) ratio.

The measurement device 66 is generally made up of a measurement unit 68 and a signal amplification unit 72. Measurement device 66 is modifiable so that one or several other functionalities are added thereto in conformity with the kind of measurement required; for example, a time resolving unit, such as an oscilloscope, is providable therein. The measurement unit 68 includes light and mass measurement instruments whereas the amplifier unit 72 includes a lock-in amplifier and/or a boxcar amp. Amplifier unit 72 performs signal processing in response to the detection timing signal 64 to thereby enable execution of the required measurement with increased precision. For instance, in the case of the lock-in amp operative to amplify a signal based on the reference timing signal, it is possible to improve S/N ratio of a measurement signal obtained. Alternatively, in the case of the boxcar amp or the oscilloscope being used to perform boxcar integration or time-resolved measurement in collaboration with the detection timing signal 64 and modulation timing signal 46, it becomes possible, for example, to perform both high-sensitivity detection of atom ions and detection of molecule ions, wherein the atom ions are due to a high-temperature/high-density plasma in high power output events whereas the molecule ions are due to a low-temperature/low-density plasma in low power output events.

Owing to the introducibility of the liquid 28 into the plasma 32 at a desired position in a pin-point injection way while preventing it from spreading, it is possible to irradiate a small-diameter energy beam 740, such as a laser beam or electron beam, to liquid 28 from a beam irradiator device 74, thereby enabling efficient reaction of beam 740 and liquid 28. This makes it possible to noticeably increase the efficiency of such reaction of liquid 28 and beam 740 (i.e., liquid use efficiency). It is also possible to permit liquid 28 to react with beam 740 at an exact point in the space, at which these cross or "intersect" each other; thus, it is possible to establish in the plasma 32 a proper spatial environment with unique properties (such as high temperature, high density, high reactivity, etc.). With this feature, the embodiment plasma system is effectively adaptable for use in the manufacture of a new material or substance. In other words, by spatially coinciding together more than three objects of the plasma 32 (also including microplasma) and liquid 28 (also including a vapor or gas) plus energy beam 740 (e.g., laser beam or electron beam), it becomes possible to realize special conditions which have never been attainable in the prior art. The cross point of liquid 28 and energy beam 740 is placed within plasma 32 in some cases, and is external thereto in other cases. In case the cross point is within plasma 32, liquid 28 is possibly gasified; nevertheless, its reaction is much higher in efficiency than when using prior art spray methods. It should be noted that although in the embodiment plasma system the liquid 28 can exhibit a phase change such as gasification after ejection from nozzle 26, the liquid 28 ejected should be interpreted to include such phase-changed state also.

### (8) Effects of Use of Timing Signals

In the above-stated embodiments of the invention, three different kinds of timing signals relating to the sample ejection and power supply to the plasma 32 and also measurement signal detection are synchronized together to thereby enable execution of high sensitivity analysis even for ultrasmall volume samples. The analysis is further increasable in sensitivity by synchronizing four separate timing signals in addition with the vaporization timing signal that is given to the vaporizer 50. In prior known signal modulation for lock-in amplification, a chopper is used to modulate a light or ion signal, resulting in about one-half of the light or ion signal being wasted and sacrificed. In contrast, the embodiment plasma system is capable of obtaining both appreciable decrease in sample amount and enhancement of sensitivity. This can be said because the system is specifically arranged to intermittently eject a sample liquid or solution into tiny droplets while simultaneously performing the output modulation, such as high-frequency wave pulsating. Thus it is possible to measure the sample solution for quantitative analysis of small volume elements. The liquid introducing plasma system 20 is able to achieve high-sensitivity analysis of ultrasmall volume samples by execution of lock-in amplification while synchronizing together three or four timings including those for the jet ejection of sample solution droplets on the order of picoliters (pl), the application of pulse-modulated electrical power to plasma, and the light/ion signal detection. In other words, the liquid introducing plasma system 20 embodying the invention is arranged to perform modulation by feeding the power and sample solution for analysis in a pulsed form, thereby making it possible to greatly suppress or minimize the consumption of power and analysis sample. Another advantage of the embodiment system lies in improvements in S/N ratios during execution of various kinds of measurements such as lock-in amplification or else, thereby enabling likewise improvement of analytical sensitivity. Consequently, the analytical sensitivity per sample amount is drastically improvable, thus enabling achievement of high-sensitivity analysis even for ultrasmall volume samples, such as living cell fluids or like biomaterials.

The detection and/or analysis of light emission, atoms, molecules or ions thereof is performed on the center axis of a plasma. Unfortunately in prior art methods which supply a myriad of sprayed liquid particles with the aid of a carrier gas, the sample spreads in the plasma, resulting in failure to use every part of the sample for the analysis. On the contrary, with the embodiment technique for introducing the sample-either in the form of a continuous linear jet of liquid or an intermittent stream of inline droplets-into a position on the center axis of the plasma in a pin-point injection manner, the sample's spatial use efficiency relative to the analysis is improved. Additionally, by performing the excitation/ionization and the detection in sync with the timing of the sample injection, the use efficiency relating to time is improved. Thus it is possible to increase the analytic sensitivity for ultrasmall volume samples.

As apparent from the foregoing, effects and advantages of the illustrative embodiments include the capability of supplying a small volume of sample solution to a plasma, the ability to introduce a liquid in the plasma at any desired position in a pin-point injection way, the ability to introduce the liquid into a small-size or "micro" plasma, the ability to reduce consumption of electrical power for creation of the plasma, the ability to improve the analytical sensitivity during element analysis, the ability to vaporize the liquid without having to give unwanted disturbance to environmental parameters, the ability to introduce the liquid into the plasma with almost 100% of injection efficiency, or the ability to perform by output modulation both the measurement of molecule ions in a low output event and the measurement of atom ions in a high output event, once at a time. Regarding the introducibility of the liquid into the plasma at any desired position, prior known optical emission spectrometry, for example, was such that only part of a sprayed sample spreading in a plasma which part resides at a measurement point is used for the intended analysis; by contrast, the embodiment plasma system of this invention is capable of introducing the liquid exactly at the measurement point whereby the analytical sensitivity is enhanceable by using an optical lens(es) to collect together rays of light as emitted at this point while avoiding waste of the sample.

## Claims

1. A liquid introducing plasma system comprising:
a plasma chamber for permitting plasma production therein;
a plasma generator device operative to create a plasma in the plasma chamber; and
a spouting device for linearly ejecting a liquid for entry into the plasma chamber.

2. A liquid introducing plasma system as recited in claim 1, further comprising:
a vaporization device operative to convert the liquid into a vapor.

3. A liquid introducing plasma system as recited in claim 1, further comprising:
a vaporizer device for conversion of the liquid into a vapor, said vaporizer device emitting a radiation energy to the liquid.

4. A liquid introducing plasma system as recited in claim 1, wherein said plasma chamber is a plasma chamber of a micro-plasma apparatus.

5. A liquid introducing plasma system as recited in claim 1, further comprising:
a vaporizer device for vaporizing the liquid; and
said plasma chamber being a plasma chamber of a micro-plasma apparatus.

6. A liquid introducing plasma system as recited in claim 1, further comprising:
a vaporizer device for emitting a radiation energy to the liquid; and
said plasma chamber being a plasma chamber of a micro-plasma apparatus.

7. A liquid introducing plasma system as recited in claim 1, wherein said plasma chamber being a plasma chamber of a micro-plasma apparatus and wherein said plasma generator device includes a voltage generator device operative to apply to the plasma chamber a direct current (DC) voltage with an increased potential level.

8. A liquid introducing plasma system as recited in claim 1, further comprising:
a signal generator device for generation of a timing signal; and
said spouting device being responsive to receipt of the timing signal generated by said signal generator device for intermittently ejecting the liquid into a plurality of in-line liquid particles.

9. A liquid introducing plasma system as recited in claim 8, wherein said plasma chamber is a plasma chamber of a microplasma apparatus.

10. A liquid introducing plasma system as recited in claim 8, further comprising:
a vaporizer device responsive to receipt of the timing signal generated by said signal generator device for vaporizing the liquid particles.

11. A liquid introducing plasma system as recited in claim 8, further comprising:
a vaporizer device responsive to receipt of the timing signal generated by said signal generator device for vaporizing the liquid particles; and
said plasma chamber being a plasma chamber of a microplasma apparatus.

12. A liquid introducing plasma system as recited in claim 8, wherein said plasma generator device operates to modulate an output in a way synchronous with timing of liquid particle ejection.

13. A liquid introducing plasma system as recited in claim 8, further comprising:
a measurement device operative to measure a plasma state in sync with timing of liquid particle ejection.

14. A liquid introducing plasma system as recited in claim 8, further comprising:
a measurement device for measuring a plasma state,
said measurement device having a measurement unit for measuring the plasma state to generate a measurement signal and any one of a lock-in amplifier and a boxcar amplifier for amplifying the measurement signal in response to a timing signal as supplied thereto.

15. A liquid introducing plasma system as recited in claim 8, further comprising:
a measurement device for measuring a plasma state;
said plasma generator device modulates an output in sync with timing of liquid particle ejection; and
said measurement device measuring the plasma state in sync with the timing of the ejection.

16. A liquid introducing plasma system as recited in claim 8, further comprising:
a vaporizer device responsive to receipt of a signal indicative of liquid particle ejection timing for vaporizing the liquid particles;
a plasma generator device operative to modulate an output in a way synchronized with the liquid particle ejection timing; and
a measurement device operative to measure a plasma state in sync with the liquid particle ejection timing.
